# EUROPÄISCHE PATENTANMELDUNG

(11) **EP 0 535 372 A2**
(43) Veröffentlichungstag der Anmeldung: **07.04.1993**
(21) Anmeldenummer: 92114659.3
(22) Anmeldetag: 27.08.1992
(51) Int. Cl.: G01S 3/782, G01S 3/781, G01J 3/12

(54) **Infrarot-Warnsystem**

(30) Priorität: 30.09.1991 DE 4132579
(71) Anmelder: SIEMENS AKTIENGESELLSCHAFT, D-80333 München (DE)
(72) Erfinder: Goeing, Friedrich, Dipl.-Ing., W-8021 Baierbrunn (DE)

(57) **Zusammenfassung**

Die Erfindung betrifft ein Verfahren zur elektronischen Peilung und Spektralanalyse für ein Infrarot-Warnsystem, bei dem das einfallende Infrarotlicht einem durchstimmbaren akustooptischen Filter zugeführt wird, und bei dem ein aus dem Filter austretendes Licht in einer linearen Detektoranordnung nach Intensität und Ablenkwinkel ausgewertet wird.

## Beschreibung

Die Erfindung betrifft ein Verfahren und eine Vorrichtung zur elektronischen Peilung und Spektralanalyse für ein Infrarot-Warnsystem.

Flugkörper erhalten ihre Antriebsenergie meist aus Fluiden oder Feststoffen. Jedes Antriebssystem strahlt Infrarotenergie in den Raum ab, deren spektrale Charakteristika von der Prozeßtemperatur und dem strahlenden Medium abhängen. Die dabei entstehenden Gase senden im angeregten Zustand ein diskontinuierliches Spektrum aus, das aus scharf begrenzten Linien besteht. Anhand der Lage und relativen Größe der Linien oder Maxima zueinander kann die jeweilige Infrarot-Strahlungsquelle passiv identifiziert werden.

Zukünftige Infrarot-Warnsysteme, insbesondere in fliegenden Plattformen, müssen Bedrohungen in einer Vielfalt von Ausstrahlungen entdecken und verfolgen. Die heute installierten Detektorsysteme können lediglich die Intensität und durch Peilung die Einfallsrichtung (in Azimut und Elevation) von Infrarotsignalen feststellen, so daß die bei Flugantriebssystemen substratspezifische Wellenlängensignatur der unvermeidbaren Infrarotstrahlung nicht ausgewertet wird.

Zur Differenzierung unterschiedlicher Infrarot-Strahlungsquellen werden Breitbandsonsoren mit vorgeschalteten Schmalbandfiltern verwendet, die das Spektrum an definierten Schwerpunktwellenlängen ausmessen.

Bei einem massebehafteten Drehspiegel ist insbesondere bei Flugmanövern das Auflösungsvermögen beschränkt.

Nachteilig ist zudem der durch die verwendete Drehspiegeltechnik sequenziell anfallende Datenstrom, weshalb kein wahlfreier Datenzugriff und damit keine wirksame Datenreduktion möglich sind.

Durch den Verzicht auf eine hohe Winkelauflösung der peilenden Komponente, d.h. einen Drehspiegel mit wenigen Spiegelebenen, karn der Datenstrom auf ein verarbeitbares Maß begrenzt werden.

Der Erfindung liegt die Aufgabe zugrunde ein Verfahren und eine Vorrichtung zur Peilung für ein Infrarot-Warnsystem anzugeben, bei dem gleichzeitig eine Identifizierung der Flugkörper möglich ist.

Diese Aufgabe wird erfindungsgemäß durch die im Anspruch 1 bzw. 2 angegebenen Merkmale gelöst.

Durch das erfindungsgemäße Verfahren ist der Datenstrom bei der Verfolgung eines Flugkörpers reduzierbar.

Weiter ist eine rein elektronische Peilung durchführbar.

Im folgenden wird die Erfindung anhand eines in der Zeichnung dargestellten Ausführungsbeispieles beschrieben. Dabei zeigen
- Fig. 1: eine schematische Darstellung der erfindungsgemäßen Vorrichtung, und
- Fig. 2: ein Kennlinienfeld zur Peilung und Spektralanalyse.

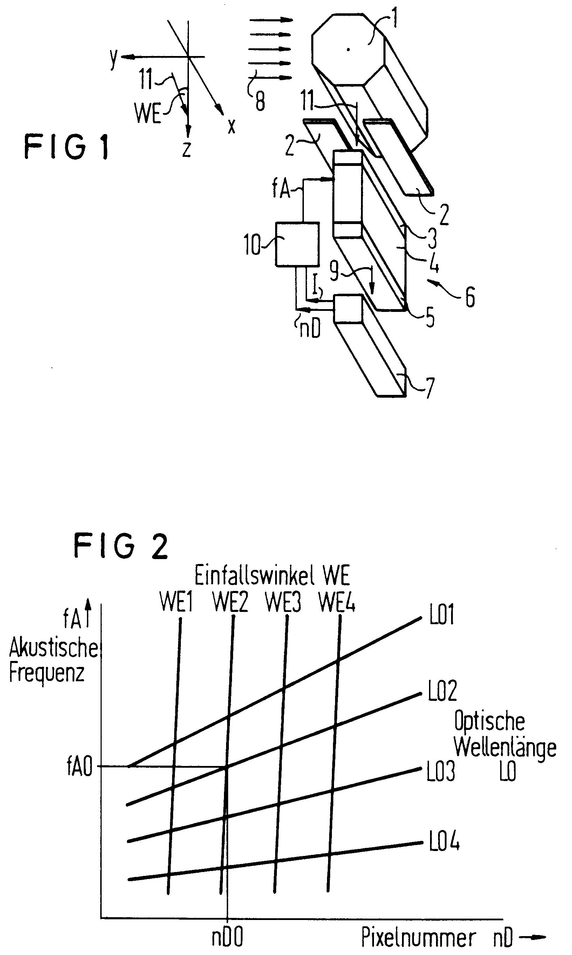

In Fig. 1 ist ein Drehspiegel 1 dargestellt, der in bekannter Weise zur Bestimmung einer ersten Winkelablage eines einfallenden infraroten Lichtes 8 verwendet wird. Hierzu wird vom Drehspiegel 1 ein Lichtstrahl 11 reflektiert und durch eine Richtungsblende 2 geschickt. Aufgrund der Position des Drehspiegels 1 kann die erste Winkelablage ermittelt werden. Die hierzu benötigte Steuerung ist nicht dargestellt, da sie für die Erfindung von untergeordneter Bedeutung ist.

Anhand des in die Fig. 1 eingezeichneten Koordinatenkreuzes ist festzustellen, daß die Achse des Drehspiegels 1 in die X-Richtung weist, während der Lichtstrahl 11 in der durch die X- und die Z-Achse aufgespannten Ebene liegt. Das einfallende Licht 8 weist in die negative Y-Richtung, so daß bei dieser Anordnung die erste Winkelablage der Elevation der Strahlungsquelle entspricht.

Zur Bestimmung einer zweiten Winkelablage und zur Spektralanalyse wird erfindungsgemäß ein durchstimmbares akustooptisches Filter 6 in Verbindung mit einer zeilenförmigen linearen Detektoranordnung 7 verwendet. Die zweite Winkelablage entspricht hierbei dem Azimut der Strahlungsquelle.

Das optisch durchstimmbare Filter 6 enthält den eigentlichen Filterbaustein 4, der durch einen akustooptischen Kristall realisiert ist. In einem solchen Kristall kommt es zur Interaktion von Licht- und Schallwellen durch die akustooptische Anregung. (Eine genauere Erklärung hierzu ist zu finden in dem Buch "Acousto-Optic Signal Processing", herausgegeben von Norman G. Berg and John N. Lee, insbesondere in Kapitel 6 von I.C.Chang.)

Die zur Erzeugung der Schallwellen mit einer akustischen Frequenz fA benötigte Wechselspannung im Ultraschallfrequenzbereich (10-150 MHz) wird von einer Steuer- und Auswertestufe 10 geliefert. Die sich im Filterbaustein 4 ausbreitende Schallwelle wirkt für das einfallende Lichtbündel wegen der großen Geschwindigkeitsunterschiede wie ein optisches Gitter, bei dem die Gitterkonstante durch Variation der akustischen Frequenz fA geändert werden kann. In Abhängigkeit von der akustischen Frequenz fA ist das aus dem Filterbaustein 4 austretende Lichtbündel (9) gebeugt.

Dem Filterbaustein 4 ist eingangsseitig ein Polarisator 3 vorund ausgangsseitig ein Analysator 5 nachgeschaltet. Der Polarisator 3 und der Analysator 5 sind vorgesehen zur Ausblendung von mehrdeutigen Lichtbrechungen aufgrund der zirkularen Polarisation des einfallenden Lichtes 11.

Der einfallende Lichtstrahl 11 besitzt gegenüber der Z-Richtung (entspricht der Lotrechten auf der Eintrittsfläche des Polarisators 3 bzw. des Filterbausteines 4) einen Einfallswinkel WE, wird im Filter 6 gebeugt und gelangt als ausfallender Lichtstrahl 9 auf die lineare Detektoranordnung 7.

In dieser Detektoranordnung 7 wird eine zu diesem Lichtstrahl 9 gehörende Pixelnummer nD und die zugehörige Intensität I gemessen und an die Steuer- und Auswertestufe 10 gegeben. Durch die Pixelnummer nD ist der Ablenkwinkel des austretenden Lichtstrahls 9 gegeben.

Zur Peilung, d.h. zur Bestimmung des Azimut, und zur Spektralanalyse bewirkt die Steuer- und Auswertestufe 10 eine sich kontinuierlich ändernde akustische Frequenz fA im Filterbaustein 4, so daß in Abhängigkeit von der Frequenz fA und der in der Detektoranordnung 7 ermittelten Pixelnummer nD der Einfallswinkel WE und eine optische Wellenlänge LO des einfallenden Lichtstrahles 11 feststellbar sind. Dies wird in folgendem anhand von Fig. 2 erläutert.

In Fig. 2 ist ein Kennfeld dargestellt, bei dem auf der Abszisse die Pixelnummer nD und auf der Ordinate die akustische Frequenz fA aufgetragen sind. Zwei Kurvenscharen für den Einfallswinkel WE, mit den einzelnen Kurven WE1 bis WE4, und für die optische Wellenlänge LO, mit den einzelnen Kurven LO1 bis LO4 sind eingezeichnet. Die Kurvenscharen sind durch die wesentlichen Übertragungseigenschaften des akustooptischen Kristalls, d.h. des Filterbausteines 4 vorgegeben. Die akustische Frequenz fA ist bei einem konstanten Einfallswinkel WE eine Funktion der optischen Wellenlänge LO. Der Ausfallswinkel, dem bei der in Fig. 1 gezeigten Vorrichtung die Pixelnummer nD entspricht, ist bei konstanter optischer Wellenlänge LO eine Funktion des Einfallswinkels WE.

Wird bei der Peilung und Spektralanalyse ein Signal festgestellt bei einer Pixelnummer nDO und bei einer akustischen Frequenz fAO, so weist der einfallende Lichtstrahl 11 eine optische Wellenlänge LO2 und einen Einfallswinkel WE2 auf. Mit dem Einfallswinkel WE2 ist der Azimut der Infrarot-Strahlungsquelle bestimmt, und durch die festgestellte optische Wellenlänge LO2 eine seiner spektralen Komponenten.

Die funktionale Verknüpfung dieser vier Größen ist eindeutig.

Eine wirksame Datenreduktion ist mit Verfahren der Bildmustererkennung durch adoptive Steuerung der akustischen Frequenz fA möglich.

Bei einer Berücksichtigung der beiden atmosphärischen Fenster für die Ausbreitung des infraroten Lichtes (3-5 µm und 8-12µm) können zwei Filter 6 mit je einer Detektoranordnung 7 vorgesehen sein.

### Bezugszeichenliste

- 1: = Drehspiegel
- 2: = Richtungsblende
- 3: = Polarisator
- 4: = Filterbaustein
- 5: = Analysator
- 6: = durchstimmbares akustooptisches Filter (Acousto-Optic Tunable Filter)
- 7: = lineare Detektoranordnung
- 8: = infrarotes Licht
- 9: = austretender Lichtstrahl
- 10: = Steuer- und Auswertestufe
- 11: = einfallender Lichtstrahl
- x,y: = Koordinaten
- WE: = Einfallswinkel
- nD: = Pixelnummer (Ablenkwinkel)
- fA: = akustische Frequenz
- LO: = optische Wellenlänge
- I: = Intensität

## Patentansprüche

1. Verfahren zur elektronischen Peilung und Spektralanalyse für ein Infrarot-Warnsystem bei dem das einfallende Infrarotlicht (11) einem durchstimmbaren akustooptischen Filter (6) mit einer variablen akustischen Frequenz (fA) zugeführt wird, und
bei dem ein aus dem Filter (6) austretendes Licht (9) in einer linearen Detektoranordnung (7) nach Intensität (I) und Ablenkwinkel (nD) in Abhängigkeit von der akustischen Frequenz (fA) ausgewertet wird, so daß über die Frequenz (fA) und den Ablenkwinkel (nD) eine optische Wellenlänge (LO) und ein Einfallswinkel (WE) des einfallenden Lichtes (11) bestimmbar sind.

2. Vorrichtung zur elektronischen Peilung und Spektralanalyse für ein Infrarot-Warnsystem,
mit einem durchstimmbaren aktustooptischen Filter (6), in dem das infrarote Licht gebeugt wird, und
mit einer nachgeschalteten linearen Detektoranordnung (7) zur Bestimmung des Ablenkwinkels (Pixelnummer nD) und der Intensität (I) des gebeugten Lichtes.
